# EUROPEAN PATENT APPLICATION

(11) **EP 4 585 383 A1**
(43) Date of publication of application: **16.07.2025**
(21) Application number: 24382021.4
(22) Date of filing: 11.01.2024
(51) Int. Cl.: B28B 1/00, B28B 13/02, B29C 67/24, B44C 5/04, B44F 9/04

(54) **ARTIFICIAL STONE SLAB AND MANUFACTURING METHOD THEREOF**

(71) Applicant: Kenro Materia, SL, 46004 Valencia (ES)
(72) Inventor: SANCHIS BRINES, Francisco Antonio, 46182 La Cañada (Paterna) (ES)
(74) Representative: Torner, Juncosa I Associats, SL

(57) **Abstract**

A method of manufacturing an artificial stone slab comprising pouring a first layer (10) of a first material; depositing a pattern of veins (30) of a second material on the first layer (10) and/or within a pattern of grooves (40) defined therein; depositing a second layer (20) of a third material covering the first layer (10) and the pattern of veins (30), applying vacuum and vibration to the materials and curing said materials obtaining the artificial stone slab; wherein the third material is less fluid and/or denser than the second material, the vibration producing the raising of the second material through the second layer (20); or the first material is more fluid and/or less dense than the second material, the vibration producing the sinking of the second material through the first layer (10).

## Description

### Technical field

The present invention concerns to a manufacturing method of an artificial stone slab using different hardenable fluid mixtures including granular particles, which provides an artificial stone slab with a pattern of veins with a more natural appearance, and to the artificial stone slabs obtained from such method.

### Background of the Invention

Artificial stone slabs obtained using different hardenable fluid mixtures are known. According to those known methods, the different hardenable fluid mixtures are poured into a mold and, after vibration and compression, are cured to obtain a hardened artificial stone slab.

For example, patent documents US4698010A and EP0970790B1, describe a method of manufacturing artificial stone slabs with a cluster of granular particles that uses polymerizable resins mixed with granular particles for solidifying said cluster after curing with vibration, pressure and vacuum, which allows eliminating any trace of air from the inside of the mixture.

A product similar to that described up until now is also known by means of patent document WO2014108582, but it is formed by two different colored mixtures of said cluster that are combined forming strata, making said product looks like it has thick veins, but said document does not describe in detail the method whereby both mixtures are combined producing said strata, although they seem to be obtained by means of stacking both mixtures in alternate layers. Said system does not allow defining the precise path or geometry of said veins.

The technique of manufacturing the so-called cement tiles (or hydraulic pavement) consisting of placing, in a mold, inserts defining compartments separated by thin walls is also known. A different colored fluid mixture, conventionally formed by a mixture of cement, water and colorant, is poured into each compartment, after which the insert is removed, the mold is filled with cement and the mold is compressed, obtaining a rigid slab with a visible face showing a predefined precise pattern of different colored areas.

Document FR353105 describe a method of manufacturing a plaster slab containing veins, wherein said veins are created moving, by hand, a pipe through the molded plaster before its hardening, creating a groove on it and filling said groove with a hardenable fluid supplied through said pipe.

FR 2117007 discloses a process for the production of slabs with veins, or tiles with drawing, comprising filling a mold with a layer of colored or colorless paste, for example a chipboard cement; printing in this layer imprints by means of appendages attached to a common support having the configuration of the desired pattern; said imprints including one or more colored materials and vibrating the mass and completing the filling of the mold by a second layer of paste, for example concrete, and compressing the mass thus formed.

The methods described above for creating a pattern of veins produce a precise and well defined pattern of veins, with sharp edges between the material constitutive of the veins and the material constitutive of the rest of the artificial stone slab, which produce a non-natural appearance and increases the risk of infiltrations or breakings between those materials constitutive of the artificial stone slab.

A method to obtain a more natural appearance and an improved binding between the materials constitutive of the artificial stone slab is needed.

The present invention provides a solution to the above and other problems.

### Description of the Invention

The present invention concerns to a method of manufacturing an artificial stone slab, as defined in claim 1, and to an artificial stone slab obtained from such method, as described in claim 8.

The method of manufacturing an artificial stone slab comprises:
pouring a first layer of a hardenable fluid mixture of a first material;
depositing a pattern of veins of a hardenable fluid mixture of a second material on an upper surface of the first layer and/or within a pattern of grooves defined on the upper surface of the first layer;
applying vacuum and vibration, and also optionally compression, to the hardenable fluid mixtures and curing said hardenable fluid mixtures producing the hardening thereof obtaining the artificial stone slab.

The hardenable fluid mixtures mentioned in this document are referred to a mixture containing a polymerizable resin, additives and optionally also granular particles having a different grain size distribution. This mixture, when in fluid state, can be poured into a mold to shape the artificial stone slab, and can be later cured to produce its solidification with said shape.

By way of example, the materials forming the fluid mixture can be selected, for example, from the following: resin selected from unsaturated polyester resin, methacrylate resin, epoxy resin, vinyl resin; granular particles having a different grain size distribution selected from stone particles such marble, dolomite, opaque quartz, crystalline quartz, graphite, ferrosilicon, basalt, feldspar, granite, cristobalite, silica or other granular particles such glass, metal particles and plastic particles; additives selected from colorants, binders, accelerants, catalysts.

According to the above, the first material is poured, preferably in a slab-shaped mold, forming a first layer, typically a uniformly thick first layer which main surfaces are a lower surface facing the bottom of the mold and an upper surface exposed and parallel to the bottom surface.

Then, a second material is deposited defining a pattern of veins on the exposed upper surface of the first layer, or within a pattern of grooves defined in the first layer.

The pattern of veins is a pattern of thin veins, with a thickness below 5mm, and/or of thick veins, with a thickness equal or above 5mm. Those veins can be branched, faithfully reproducing the look of natural stones with branched patterns of veins such natural marbles, or even being able to reproduce geometric shapes or figures of any kind.

The second material is deposited following a predefined pattern of veins. This precise deposition of the second material can be achieved, for example, by covering the exposed upper surface of the first layer with a coating plate provided with openings coinciding with the pattern of veins, and a second material is poured through said openings resulting in the pattern on veins.

The precise deposition of the second material can be achieved, according to an alternative example, through a projecting nozzle attached to a robotic support configured to precisely move the projecting nozzle above the first layer, projecting the second material through the projecting nozzle following the layout of said pattern of veins.

Said second material can be simply deposited on the upper surface of the first layer, which is a flat surface, of alternatively it can be deposited inside grooves defined in the first layer following a pattern of grooves equal to the pattern of veins.

The grooves can be engraved, for example, by pressing an array of protrusions on the exposed upper surface of the first layer, said array of protrusions being complementary with the pattern of grooves to be engraved.

Inserting the array of protrusions in the exposed upper surface of the first layer and the subsequent removal thereof leaves said exposed upper surface with said pattern of grooves.

The array of protrusions can be placed on a flat plate, for example, or arranged on a roller which gradually insert said pattern on the first layer by means of rolling over said exposed upper surface.

Optionally, the engraving of the first layer further includes forming slopes towards the grooves in the regions of the first layer adjacent to said grooves. In such case, the second material can be poured over the regions of the first layer close to the grooves in a fluid state or can be uniformly poured over the entire first layer in said fluid state, and the second material will flow on the slops towards the grooves of the pattern of grooves filling said grooves, without requiring precise means to deposit the second material. The second material shall be precisely dosed to fill the pattern of grooves.

There are many other ways for obtaining said grooves, for example, by inserting a punch or a horizontal rotating engraving disc roll in said fluid mixture, and subsequently moving same reproducing the pattern of thin veins to be obtained, either by following a pattern defined by means of a cam guide, or by an automated arm programmed for reproducing said pattern.

The proposed method further comprises, in a manner not known in the state of the art:
before the application of vacuum and vibration and before the curing, depositing a second layer of a hardenable fluid mixture of a third material covering the upper surface of the first layer and the pattern of veins; wherein
the third material is less fluid and/or denser than the second material, the third material including granular particles and having a color different than the color of the second material, the vibration producing the raising of the second material through the second layer, the pattern of veins emerging on an upper surface of the second layer; or
the first material is more fluid and/or less dense than the second material, the first material including granular particles and having a color different than the color of the second material, the vibration producing the sinking of the second material through the first layer, depositing the pattern of veins on the lower surface of the first layer.

According to that, before the application of vibration, the second material constitutive of the pattern of veins is comprised between the first and second layers of first and third materials.

It is known that when to different fluid materials are mixed and vibrated, the more fluid material tends to raise towards the surface, and the less fluid material tends to sink towards the bottom. This phenomenon is similar to the soil liquefaction occurred during earthquakes.

Also, when to different fluid materials are mixed and vibrated, the less dense material tends to float above the denser material, the low-density material also raising towards the surface of the denser material and the denser material sinking towards the bottom. This phenomenon is similar to the system used to separate gold particles from other granular particles through panning.

Due to the different fluidity and/or density of the second material in regard to the first or second materials, when vibration is applied the second material emerges on the upper surface of the second layer, the second material raising due to its higher fluidity and/or lower density regards to the third material, or emerges in the lower surface of the first layer due to its lower fluidity and/or higher density in regards to the first material.

During its raising towards the surface of the second layer, or during its sinking towards the lower surface of the first layer, the pattern of veins becomes more irregular, particularly on its edges, because the flowing of the second material through the first or second material produces turbulences, producing an exposed pattern of veins with a more natural appearance on the surface of the hardened artificial stone slab.

In particular, during the raising or sinking of the second material, the edges of the pattern of veins gets blurrier, producing certain mixing with the surrounding material, which improves the overall resistance of the slab and produces a more natural-looking slab.

According to a second aspect, the present invention is also directed towards an artificial stone slab obtained according to the method described in this application.

The proposed artificial stone slab comprises:
a first layer made of a first material defining one main surface of the slab, or a second layer made of a third material defining another main surface of the slab;
a pattern of veins contained within the first layer of the first material and exposed on the main surface defined thereon, the first material including granular particles, or contained within the second layer made of the third material and exposed on the main surface defined thereon, the third material including granular particles, the pattern of veins being made of a second material with a color distinctive from the color of the first material or of the second material on which the pattern of veins are contained.

According to the above, the artificial stone slab may include one first layer with the pattern of veins contained therein and exposed in its main surface, or one second layer with the pattern of veins contained therein and exposed in its main surface.

According to the present invention, the artificial stone slab further comprises, in addition to the first layer with the pattern of veins contained therein, a second layer made of a third material overlapped to the first layer and attached to a surface thereof opposed to the main surface with the exposed pattern of veins.

Alternatively, the artificial stone slab comprises, in addition to the second layer with the pattern of veins contained therein, a first layer made of a first material overlapped to the second layer and attached to a surface thereof opposed to the main surface with the exposed pattern of veins.

The edges of the veins of the pattern of veins are increasingly uneven towards the main surface of the slab where the pattern of veins is exposed and the second material and the surrounding first or second material are increasingly intermingled on said edges towards the main surface of the slab where the pattern of veins is exposed.

According to that, the edges of the pattern of veins are not regular across the entire thickness of the layer on which they are contained, but are more uneven as closer to the main surface where the pattern of veins is exposed, the second material constitutive of the pattern of veins being more intermingled with the first or second surrounding material as closer to the main surface where the pattern of veins is exposed. This is consequence of the production method and produces an artificial stone slab with a more natural-looking appearance due to the unevenness and blurriness of the edges of the veins constitutive of the pattern of veins.

It will be understood that the main surfaces of the first and second layers corresponds with the upper and lower surfaces described above.

### Brief description of the Figures

The foregoing and other advantages and features will be more fully understood from the following detailed description of an embodiment with reference to the accompanying drawings, to be taken in an illustrative and non-limitative manner, in which:

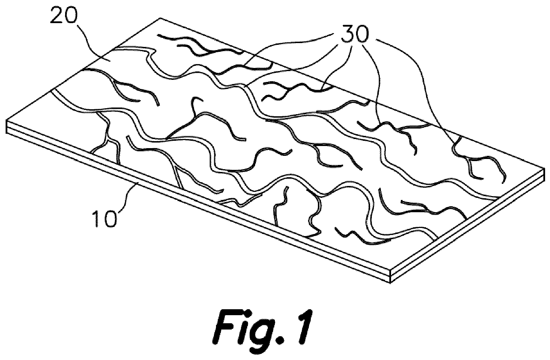

Fig. 1 shows a perspective view of the artificial stone slab obtained according to the present invention;

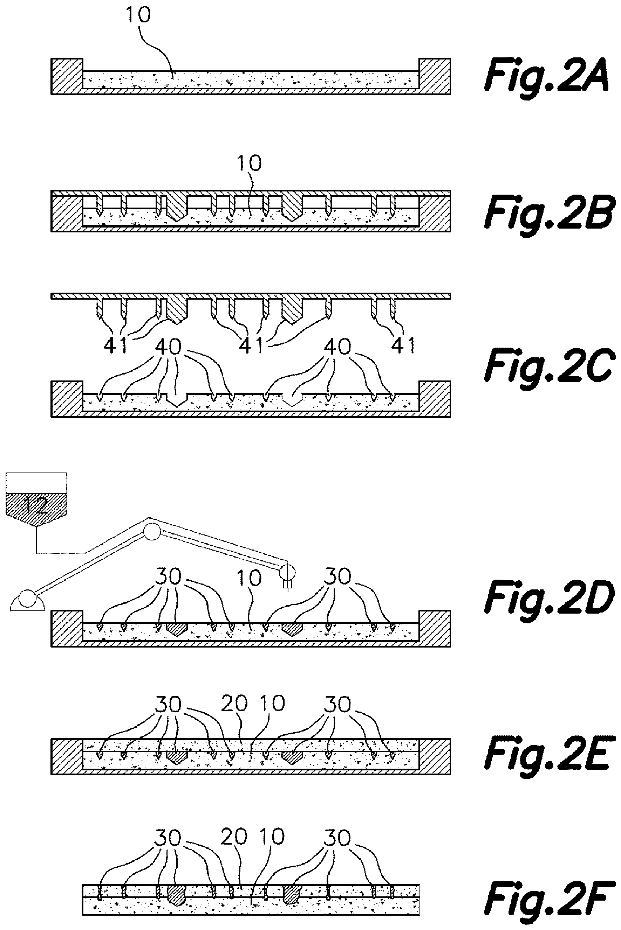

Fig. 2A to 2F shows successive steps of the proposed method according to a first embodiment in which inserts with protrusions reproducing the pattern of veins are inserted into the first layer (Fig. 2B) and subsequently removed, leaving a pattern pf grooves therein (Fig. 2C), which are later filled with the second material producing the pattern of veins (Fig. 2D), later covered with the second layer (Fig. 2E). After applying vibrations, compression and vacuum and after the curing the pattern of grooves migrate through the second layer producing an artificial stone slab with the pattern of veins visible on its surface (Fig. 2F);

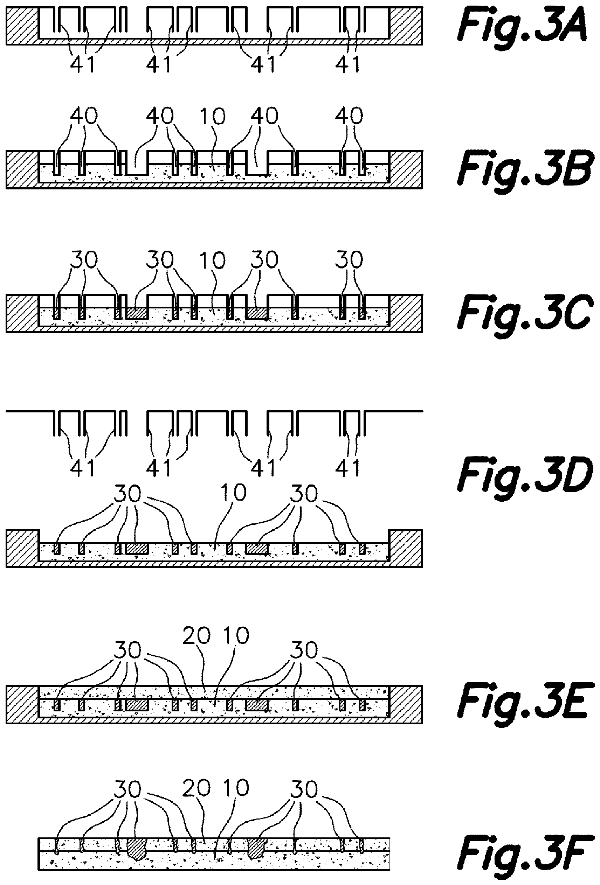

Figs. 3A to 3F shows the same as Figs. 2A to 2F but according to an alternative embodiment, in which each protrusion of the insert is defined by a pair of facing walls, forming a bottom open space in between with the shape of a vein. The insert is introduced in the mold before the pouring of the first layer (Fig. 3A), which is poured in the mold between the protrusions of the insert (Fig. 3B), maintaining said spaces empty defining the pattern of grooves. Once the pattern of grooves has been filled with the second material (Fig. 3C), the inserts are retired (Fig. 3D) and the second layer is poured (Fig. 3E);

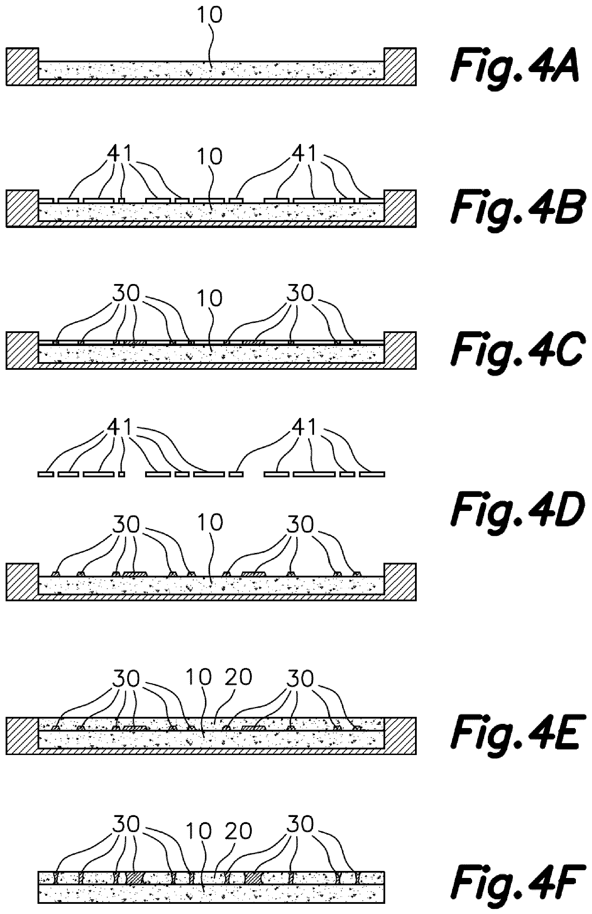

Figs. 4A to 4F shows the same as Figs. 2A to 2F but according to an additional alternative embodiment, in which the inserts are inserted in the mold, on top of the first layer (Fig. 4B), said insert including the pattern of grooves with a certain depth, which are filled with the second material forming the pattern of grooves on top of the first layer (Fig. 4C). Later the insert is removed leaving the pattern of veins on top of the first layer (Fig. 4D), which are later covered with the second layer (Fig. 4E).
Figs. 2F, 3F and 4F show the resulting artificial stone slab obtained when the second material constitutive of the pattern of veins is more fluid and/or less dense than the third material constitutive of the second layer, the pattern of veins raising though the second layer during the vibration.

An artificial stone slab equivalent to that shown in Figs. 2F, 3F and 4F, but with the pattern of grooves being visible in the lower surface instead of in the upper surface will be obtained with the same steps of the process if the second material constitutive of the pattern of veins is less fluid and/or denser than the first material constitutive of the first layer.

### Detailed Description of the Invention and of particular embodiments

According to the preferred embodiment, the present invention describes a method to manufacture an artificial stone slab with a natural-looking pattern of veins 40 therein, for example similar to marble or other metamorphic rocs.

Typically, the artificial stone slab is used as kitchen countertop, as flooring panel or as a wall covering.

Typically, the artificial stone slabs have a total thickness comprised between 1cm and 3cm and are at least 60cm wide and at least 120cm long.

The proposed method comprises first pouring a first layer 10 of a hardenable fluid mixture of a first material within a mold, letting an upper surface of the first layer 10 exposed.

Then, a pattern of veins 30 of a hardenable fluid mixture of a second material is deposited on said exposed upper surface of the first layer 10.

Optionally, before depositing the second material, a pattern of grooves 40 is defined on the first layer 10, for example by temporally introducing an insert 41 reproducing the pattern of grooves 40 in the first layer which, when removed, leaves the pattern of grooves thereon or by introducing the insert 41 in the mold before pouring the first material. In this case, the second material will be deposited within the pattern of grooves 40, defining the pattern of veins 30.

Once the second material has been deposited, a second layer 20 of a hardenable fluid mixture of a third material is poured in the mold covering the exposed upper surface of the first layer 10 and the pattern of veins 30.

The hardenable fluid mixture of the first, second and third materials include polymerizable resins in fluid state mixed with other components such additives and granular particles.

Then vacuum, vibration and compression is applied to the uncured artificial stone slab including hardenable fluid mixtures of first, second and third materials.

According to a first embodiment of the proposed invention, the third material is less fluid and/or denser than the second material, the vibration producing the raising of the second material through the second layer 20, the pattern of veins 30 emerging on an upper surface of the second layer 20. In such case, the third material will have a color different than the color of the second material, allowing the visual differentiation between the second layer and the pattern of veins exposed on its upper surface.

In such case, the second layer 20 is preferably less than 10mm thick or less than 6mm thick, above the pattern of veins 30 of the second material before vibrating, facilitating the pattern of veins to fully emerge on the upper surface. The second layer 20 can be also equal or more fluid and/or equal or less dense than the first material, preventing the raising of the first material through the second layer 20 during the vibration of the artificial stone slab.

According to an alternative embodiment of the same invention, it is proposed the first material to be more fluid and/or less dense than the second material, the vibration producing the sinking of the second material through the first layer 10, the pattern of veins 30 being deposited on a lower surface of the first layer 10. In such case, the first material will have a color different than the color of the second material, allowing the visual differentiation between the first layer and the pattern of veins exposed on its lower surface.

In such case, the first layer 10 is preferably less than 10mm thick or less than 6mm thick, under the pattern of veins 30 of the second material before vibrating, facilitating the pattern of veins to fully emerge on the lower surface. The first layer 10 can be also equal or less fluid and/or equal or denser than the third material, preventing the sinking of the third material through the first layer 10 during the vibration of the artificial stone slab.

In any case, after the vibration, the curing of the hardenable fluid mixtures is completed producing the hardening thereof obtaining the artificial stone slab with a visually distinctive natural-looking pattern of veins on its upper surface according to the first embodiment or on its lower surface according to the second alternative embodiment described above.

According to an additional embodiment of the invention, at least some grooves constitutive of the pattern of grooves 40 may expand through the entire thickness of the first layer 10 reaching the lower surface thereof, when the third material is less fluid and/or denser than the second material. In this case, those veins will expand through the entire thickness of the slab but will present a more natural-looking appearance one of the upper surface of the artificial stone slab, where the pattern of veins has emerged after raising through the second layer.

Optionally, the pattern of grooves 40, or a portion thereof expanding through the entire thickness of the first layer 10, can be defined by vein-shaped inserts 41 maintaining the first material out of the pattern of grooves 40 or out of a portion thereof occupied by the inserts.

Said inserts 41 can be removed before the deposition of the second material on the pattern of grooves leaving the grooves constitutive of the pattern of grooves open.

Alternatively, said inserts can be bottom-open inserts introduced in the mould before the pouring of the first layer, keeping the first material out of the pattern of grooves 40 during its pouring. Then, the second material is poured inside the inserts 41 which are later removed before the pouring of the second layer 20.

According to another alternative embodiment, the grooves of the pattern of grooves 40, or part thereof, are engraved on the upper surface of the first layer 10 before the deposition of the second material, for example using a robotic engraving device programable to engrave the pattern of grooves according to a predefined pattern corresponding with the pattern of veins 30.

Preferably the second material includes granular particles, which can be smaller than the granular particles of the first and/or second materials.

The present invention is also directed towards an artificial stone slab obtained according to the method described above.

Said artificial stone slab includes a first layer 10 made of a first material defining one main surface of the slab, a second layer made of a third material defining another main surface of the slab.

According to a first embodiment of the proposed artificial stone slab, a pattern of veins 30 is contained within the first layer 10 of the first material and is exposed on the main surface of the slab defined thereon. In such case the first material will include granular particles which preferably are stone particles.

In this case, the second layer 20 can be less than 10mm thick or less than 6mm thick, and/or may have a thickness comprised between 15% and 35% of the total thickness of the artificial stone slab.

According to an alternative embodiment, the pattern of veins 30 is contained within the second layer 20 made of the third material and is exposed on the main surface of the slab defined thereon. In such case the third material will include granular particles which preferably are stone particles.

In this case, the first layer 10 can be less than 10mm thick or less than 6mm thick, and/or may have a thickness comprised between 15% and 35% of the total thickness of the artificial stone slab.

Irrespective if the pattern of veins is contained in the first or in the second layer, the pattern of veins 30 will be made of a second material with a color distinctive from the color of the first material or of the second material on which the pattern of veins 30 is contained.

The edges of the veins of the pattern of veins 30 are increasingly uneven towards the main surface of the slab where the pattern of veins 30 is exposed and the second material and the surrounding first or second material are increasingly intermingled on said edges towards the main surface of the slab where the pattern of veins 30 is exposed.

According to that, the maximal unevenness of the edges of the veins and the maximal mixing between the second material and the surrounding first or third material is in the main surface of the slab where the pattern of veins is exposed, said unevenness and mixing being reduced within the thickness of the artificial stone slab.

This feature is result of the raising of the second material through the second layer or of the sinking of the second material through the first layer, the unevenness and mixing increasing from the interface between the first and second layer towards the main surfaces of the artificial stone slab due to the interaction with the surrounding material during such raising or sinking.

Preferably, the second material includes granular particles, such stone particles, which are preferably smaller than the granular particles of the first and/or second materials.

## Claims

1. A method of manufacturing an artificial stone slab comprising:
pouring a first layer (10) of a hardenable fluid mixture of a first material;
depositing a pattern of veins (30) of a hardenable fluid mixture of a second material on an upper surface of the first layer (10) and/or within a pattern of grooves (40) defined on the first layer (10);
applying vacuum and vibration to the hardenable fluid mixtures and curing said hardenable fluid mixtures producing the hardening thereof obtaining the artificial stone slab;
**characterized in that** the method further comprises,
before the application of vacuum and vibration and before the curing, depositing a second layer (20) of a hardenable fluid mixture of a third material covering the upper surface of the first layer (10) and the pattern of veins (30); wherein
the third material is less fluid and/or denser than the second material, the third material including granular particles and having a color different than the color of the second material, the vibration producing the raising of the second material through the second layer (20), the pattern of veins (30) emerging on an upper surface of the second layer (20); or
the first material is more fluid and/or less dense than the second material, the first material including granular particles and having a color different than the color of the second material, the vibration producing the sinking of the second material through the first layer (10), depositing the pattern of veins (30) on a lower surface of the first layer (10).

2. The method according to claim 1 wherein
the second layer (20), made of less fluid and/or denser third material than the second material, is less than 10mm thick or less than 6mm thick, above the pattern of veins (30) of the second material before vibrating; or
the first layer (10), made of more fluid and/or less dense first material than the second material, is less than 10mm thick, or less than 6mm thick, under the pattern of veins (30) of the second material before vibrating.

3. The method according to claim 1 or 2 wherein
the second layer (20), made of third material less fluid and/or denser than the second material, is equal or more fluid and/or equal or less dense than the first material, preventing the raising of the first material through the second layer (20); or
the first layer (10), made of first material more fluid and/or less dense than the second material, is equal or less fluid and/or equal or denser than the third material, preventing the sinking of the third material through the first layer (10).

4. The method according to claim 1, 2 or 3 wherein at least some grooves constitutive of the pattern of grooves (40) expands through the entire thickness of the first layer (10) reaching the lower surface thereof, when the third material is less fluid and/or denser than the second material.

5. The method according to claim 4 wherein the pattern of grooves (40), or a portion thereof expanding through the entire thickness of the first layer (10), is defined by vein-shaped inserts (41), which maintain the first material out of the pattern of grooves (40) or out of said portion thereof, the inserts (41) being removed before the deposition of the second material, or said inserts being bottom-open inserts introduced in the mould before the pouring of the first material preventing the first material to enter in the pattern of grooves, the second material being poured inside the inserts (41) and the inserts (41) being removed before the pouring of the second layer (20).

6. The method according to any preceding claim wherein the grooves of the pattern of grooves (40) or part thereof are engraved on the upper surface of the first layer (10) before the deposition of the second material.

7. The method according to any preceding claim wherein the second material includes granular particles.

8. The method according to claim 7 wherein the granular particles of the second material are smaller than the granular particles of the first and/or second materials.

9. An artificial stone slab obtained according to the method described in any of the preceding claims wherein the artificial stone slab includes
a first layer (10) made of a first material defining one main surface of the slab, or a second layer made of a third material defining another main surface of the slab;
a pattern of veins (30) contained within the first layer (10) of the first material and exposed on the main surface of the slab defined thereon, the first material including granular particles, or contained within the second layer (20) made of the third material and exposed on the main surface of the slab defined thereon, the third material including granular particles, the pattern of veins (30) being made of a second material with a color distinctive from the color of the first material or of the second material on which the pattern of veins (30) are contained;
**characterized in that** the artificial stone slab further comprises:
a second layer (20), made of a third material, overlapped to the first layer (10) and attached to a surface thereof opposed to the main surface with the exposed pattern of veins (30), or a first layer (10), made of a first material, overlapped to the second layer (20) and attached to a surface thereof opposed to the main surface with the exposed pattern of veins (30); and
the edges of the veins of the pattern of veins (30) are increasingly uneven towards the main surface of the slab where the pattern of veins (30) is exposed and the second material and the surrounding first or second material are increasingly intermingled on said edges towards the main surface of the slab where the pattern of veins (30) is exposed.

10. The artificial stone slab according to claim 9 wherein
the second layer (20), on which main surface the pattern of veins (30) is exposed, is less than 10mm thick or less than 6mm thick; or
the first layer (10), on which main surface the pattern of veins (30) is exposed, is less than 10mm thick, or less than 6mm thick.

11. The artificial stone slab according to claim 9 or 10 wherein
the second layer (20), on which main surface the pattern of veins (30) is exposed, has a thickness comprised between 15% and 35% of the total thickness of the artificial stone slab;
the first layer (10), on which main surface the pattern of veins (30) is exposed, has a thickness comprised between 15% and 35% of the total thickness of the artificial stone slab.

12. The artificial stone slab according to any preceding claim 9, 10 or 11 wherein the second material includes granular particles.

13. The artificial stone slab according to claim 12 wherein the granular particles of the second material are smaller than the granular particles of the first and/or second materials.
